# EUROPÄISCHE PATENTANMELDUNG

(11) **EP 1 600 656 A2**
(43) Veröffentlichungstag der Anmeldung: **30.11.2005**
(21) Anmeldenummer: 05103236.5
(22) Anmeldetag: 21.04.2005
(51) Int. Cl.: F16D 67/02, H02K 7/102

(54) **Bremsvorrichtung für einen elektrischen Antriebsmotor und Möbel**

(30) Priorität: 28.05.2004 DE 202004008714 U
(71) Anmelder: Dewert Antriebs- und Systemtechnik GmbH, 32278 Kirchlengern (DE)
(72) Erfinder: Bokämper, Ralf, 32312, Lübbecke (DE)
(74) Vertreter: Dantz, Jan Henning

(57) **Zusammenfassung**

Eine Bremsvorrichtung (15) für einen elektrischen Motor (3), insbesondere für einen Antriebsmotor mit einer Ankerwelle (1) für verstellbare Möbel, umfasst:
- mindestens ein Bremselement (5, 6, 7) zum Feststellen der Ankerwelle (1) bei Stillstand des Motors (3);
- mindestens eine Kraftspeichereinrichtung (11) zum Aufbringen einer Kraft auf das Bremsglied (10) bei Stillstand des Motors (3);
- mindestens eine Betätigungseinrichtung (12) zum Betätigen der Bremsvorrichtung (15) und zum Lüften derselben durch Aufhebung der Einwirkung der Kraftspeichereinrichtung (11) auf das Bremsglied (10) bei Betrieb des Motors (3);
- mindestens einen Betätigungseingang (13, 14) zur Einleitung einer Kraft und/oder eines Signals zur Betätigung der Betätigungseinrichtung (12); und
- mindestens einen Bremsläufer (4), welcher mit der Ankerwelle (1) in drehfester Verbindung steht.

Dadurch lässt sich eine einfach aufgebaute und kostengünstige Bremsvorrichtung erhalten.

## Beschreibung

Die Erfindung betrifft eine Bremsvorrichtung für einen elektrischen Motor, insbesondere für einen Antriebsmotor mit einer Antriebswelle für verstellbare Möbel nach der Gattung des unabhängigen Schutzanspruchs 1, sowie ein Möbel.

Derartige elektrische Motoren sind für Einsatzzwecke beispielsweise zum Verstellen von Möbeln bekannt, wobei ihre Drehbewegung über ein Getriebe, vorzugsweise ein sogenanntes Spindel-/Spindelmuttergetriebe in eine Linearbewegung umgewandelt wird. Andere Ausführungen eines Getriebes wie Rädergetriebe, Zugmittelgetriebe, Umlaufgetriebe oder Kombinationen sind ebenfalls bekannt. Die Ausführung eines solchen Motors kann dabei ein Gleich- oder Wechselstrommotor mit einem angebauten Getriebe sein. Häufig werden auch sogenannte Lüftermotoren verwendet, deren Abtriebswelle mit einer Schnecke ausgebildet ist, welche dann mit einer weiteren Getriebestufe versehen sind.

Bei einigen Getriebeausführungen kommt es auf besondere Geschwindigkeit der Verstellung an. Hierbei sind jedoch Grenzen durch die sogenannte Selbsthemmung der zum Einsatz kommenden Getriebearten gegeben. Ein äußere aufliegende Last kann bei nicht eingeschaltetem Motor über das Getriebe den Motor in Drehung versetzen, so daß diese Last langsam oder auch schneller absinken kann, ohne daß der Motor betrieben wird, was beispielsweise bei einem hochgefahrenen Tisch durch ein darauf befindliches schweres Teil oder durch das Tischgewicht selbst ausgelöst werden kann.

Hierzu sind unterschiedliche Lösungen zum Bremsen dieser selbsttätigen nach unten gerichteten Bewegung an unterschiedlichen Stellen eines solchen Antriebszuges vorgeschlagen worden, wobei das geringste Bremsmoment an der Ankerwelle des Antriebsmotors aufgebracht werden muß.

Es sind unterschiedliche Bremsvorrichtungen für derartige Motoren bekannt, welche zum Beispiel mit elektromagnetischer Lüftung der Bremse beziehungsweise Aufhebung der Bremswirkung ausgerüstet sind. Andere Ausführungen verwenden elektromechanische Bauelemente, welche unter Anschließen an eine elektrische Leistungsquelle ein oder mehrere Bremselemente gegen eine Kraft eines Kraftspeicherelementes lösen beziehungsweise lüften.

Derartige Einrichtungen haben den Nachteil, daß sie einerseits ein großes Volumen beanspruchen, und andererseits die zur Betätigung notwendigen Spannungen relativ hoch zu den niedrigen Betriebskleinspannungen der Motoren sind, wobei auch die notwendigen elektrischen Leistungen nicht unerheblich sind.

Die Erfmdung hat die Aufgabe, eine Bremsvorrichtung für einen Motor zu verbessern, welche mit wenigen Teilen einen einfachen, universellen und preiswerteren Aufbau ermöglicht.

Die Lösung der Aufgabe erfolgt dadurch, daß die Bremsvorrichtung Folgendes aufweist:
- mindestens ein Bremselement zum Feststellen der Ankerwelle bei Stillstand des Motors;
- mindestens eine Kraftspeichereinrichtung zum Aufbringen einer Kraft auf das Bremsglied bei Stillstand des Motors ;
- mindestens eine Betätigungseinrichtung zum Betätigen der Bremsvorrichtung und zum Lüften derselben durch Aufhebung der Einwirkung der Kraftspeichereinrichtung auf das Bremsglied bei Betrieb des Motors;
- mindestens einen Betätigungseingang zur Einleitung einer Kraft und/oder eines Signals zur Betätigung der Betätigungseinrichtung; und
- mindestens einen Bremsläufer, welcher mit der Ankerwelle in drehfester Verbindung steht.

Dabei kann das Feststellen formschlüssig und / oder kraftschlüssig erfolgen. Bei einem kraftschlüssigen Feststellen kann jedoch das Maß der Feststellwirkung der Ankerwelle an die Einsatzbedingungen des Motors angepaßt sein, so dass ein Durchrutschen unter erhöhtem Kraftaufwand möglich sein kann.

Hierzu ist es vorteilhaft, daß die Bremsvorrichtung ein axiales Bremselement axial und/oder ein einseitiges Bremselement und/oder eine doppelseitiges Bremselement aufweist, das zum Zusammenwirken mit dem Bremsläufer ausgebildet ist.
Dabei ist es für die Wirkung der Bremse besonders vorteilhaft, wenn das doppelseitige Bremselement mehrseitig ausgebildet ist, da sich dadurch die Abmessungen verkleinern und pro Bremselement eine geringere Kraft notwendig ist.

Die Kraftspeichereinrichtung besitzt ein Kraftspeicherelement, vorzugsweise eine Feder. Somit kann ein Normbauteil, das preiswert ist, verwendet werden. Dabei kann der Ort der Anordnung des Kraftspeicherelements unterschiedlich sein. Somit kann das Kraftspeicherelement innerhalb des Motors, innerhalb der Bremsvorrichtung oder außerhalb beider sein. Der Wirkung eines Kraftspeicherelements in beispielhafter Form einer Feder steht in technischer Äquivalenz mit einem dem Motor nachgeschalteten Getriebe im Einklang. Dabei können Getriebebauteile auf die Ankerwelle, den Motor, die Bremsvorrichtung direkt oder indirekt über zwischengeschaltete Bauelemente beispielsweise einer Motoraufhängung einen derart rückwirkenden Einfluß nehmen, dass die Bremsvorrichtung ihre Intensität zum Feststellen der Ankerwelle in Abhängigkeit von der auf den Motor einwirkenden Last anpasst.

Eine vielseitige Einsatzmöglichkeit bei unterschiedlichen Systemen bietet die Bremsvorrichtung in einer weiteren Ausführung, bei welcher die Kraftspeichereinrichtung durch mechanische, magnetische, elektromagnetische, elektrische, hydraulische oder pneumatische Krafteinwirkung ausgebildet ist.

Besonders vorteilhaft ist eine Ausgestaltung, bei welcher die Betätigungseinrichtung der Bremsvorrichtung die Kraftspeichereinrichtung aufweist, da somit eine geringere Teilezahl erzielt wird.

Eine weitere Ausgestaltung sieht vor, daß die Betätigungseinrichtung der Bremsvorrichtung durch mechanische, magnetische, elektromagnetische, elektrische, hydraulische oder pneumatische Einwirkung ausgebildet ist. Hierdurch ergibt sich wiederum eine vorteilhafte Anpassung an unterschiedliche Systeme.

Eine bevorzugte Ausführungsform sieht vor, daß die Bremsvorrichtung dadurch gekennzeichnet ist, daß die Ankerwelle axial verschiebbar zur Betätigung der Bremsvorrichtung und/oder der Steuerung der Betätigungseinrichtung ausgebildet ist. Damit wird vorteilhaft die Verwendung von externer zusätzlicher Energie und weiterer Installation vermieden.

In einer besonders vorteilhaften Ausgestaltung ist die Kraftspeichereeinrichtung einstellbar und/oder selbstnachstellend ausgebildet. Daraus ergibt sich der besondere Vorteil einer individuellen Anpassung an den jeweiligen Einsatzfall, bzw. eine werksseitige Voreinstellung für große Serien mit gleichen Eigenschaften.

Auch eine sogenannte Aufhebung der Bremswirkung ist in einer Ausführungsform möglich, wobei die Kraftspeichereinrichtung mittels einer äußeren Stelleinrichung zur Aufhebung der Bremswirkung lösbar ausgebildet ist. Damit läßt sich der Einsatzbereich der Erfmdung vorteilhaft erweitern.

Es ist zweckmäßig, daß bei Betrieb des Motors die Bremsvorrichtung gelüftet ist, da dadurch vorteilhaft weniger Teile notwendig werden, denn die Betätigungseinrichtung muss nur die Kraft des Kraftspeicherelements überwinden, was bei Verwendung mehrerer Bremsvorrichtungen mit geringeren Kräften äußerst günstig ist.

Dabei kann das Lüften der Bremsvorrichtuung beispielsweise beim Anlaufen des Motors, beim Erreichen einer bestimmten Drehzahl oder beim Erreichen eines bestimmten Drehwinkels selbsttätig erfolgen. Je nach Gestaltung des mindestens einen Bremselements kann die Lüftung der Bremsvorrichtung in axialer Richtung, radialer Richtung oder kombinierte Richtungen in Bezug auf die Längsachse der Ankerwelle erfolgen.

In einer weiteren Ausführungsform ist die Bremsvorrichtung in einem Bremsgehäusemodul angeordnet, welches an dem Motor angebracht und mit der Ankerwelle über eine Kupplung drehfest gekoppelt ist. Damit lassen sich Motoren in großer Stückzahl bauen, denn sie können vorteilhaft erst kurz vor dem jeweiligen Einsatzfall mit einer Bremsvorrichtung versehen bzw. sogar vor Ort nachgerüstet werden. Außerdem ist eine Reparatur und Wartung durch das außenliegende Modul besonders vorteilhaft.

Es ist dabei vorteilhaft, daß das Bremsmodul zur Betätigung der Betätigungseinrichtung in einfacher Weise mit einer elektrischen Steckverbindung zu den Motoranschlüssen ausgerüstet ist, so daß eine zusätzliche Verdrahtung entfällt.

In einer anderen Ausgestaltung ist die Bremsvorrichtung im Motor angeordnet, wodurch vorteilhaft vorhandene Einrichtungen wie eine Kohlehalterplatte aus Trägerplatte für die Bremsvorrichtung verwendet werden können.

Eine weitere Ausführung sieht vor, daß der Bremsläufer im Stillstand des Motors kraft- und/oder formschlüssig festgestellt wird. Dieses hat den Vorteil, daß keine Reibbeläge mit Verschleiß eingesetzt werden müssen.

Die Erfindung schafft somit eine kompakte universelle Bremsvorrichtung mit einer geringen Teilezahl und einem vielseitigen Einsatzbereich bei unterschiedlichen Randbedingungen.

Die Erfindung wird nun anhand von Ausführungsbeispielen mit Bezug auf die anliegenden Zeichnungen näher beschrieben. Hierbei zeigt:
- Fig. 1: eine schematische Blockdarstellung mit Anordnungen von erfindungsgemäßen Bremsvorrichtungen an einer Ankerwelle eines Motors;
- Fig. 2: eine schematische Darstellung einer weiteren Anordnung einer erfindungsgemäßen Bremsvorrichtung an einer Ankerwelle eines Motors;
- Fig. 3: eine schematische Blockdarstellung einer erfindungsgemäßen Bremsvorrichtung; und
- Fig. 4: eine schematische Darstellung einer Modulausführungsform einer erfindungsgemäßen Bremsvorrichtung; und
- Fig. 5: eine schematische Darstellung einer erfindungsgemäßen Bremsvorrichtung mit unterbrochener Ankerwelle; und
- Fig. 6: eine schematische Darstellung einer erfindungsgemäßen Bremsvorrichtung mit einer verschiebbaren Ankerwelle; und
- Fig. 7: eine schematische Darstellung einer erfindungsgemäßen Bremsvorrichtung mit einem elastischen Koppelelement; und
- Fig. 8: eine schematische Darstellung einer erfindungsgemäßen Bremsvorrichtung mit elastischen Federelementen; und
- Fig. 9: eine weitere schematische Darstellung einer erfindungsgemäßen Bremsvorrichtung an einer Ankerwelle eines Motors.

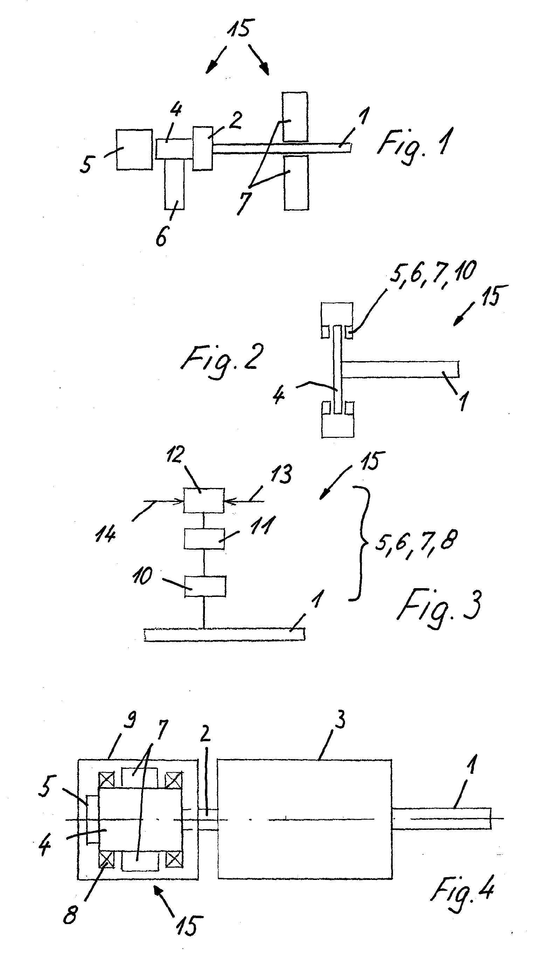

Fig. 1 zeigt in schematischer Blockdarstellung eine Ankerwelle 1 eines nicht gezeigten Motors, welche über eine Kupplung 2 mit einem Bremsläufer 4 in drehfester Verbindung steht. Der Bremsläufer 4 kann auch integraler Bestandteil der Ankerwelle 1 sein.

Die Ankerwelle 1 weist an ihrem dem Bremsläufer 4 gegenüberliegenden Ende ein nicht näher dargestelltes Abtriebselement, vorzugsweise eine Verzahnung in Form einer Schnecke, auf. Dieses ist bekannt und soll nicht weiter ausgeführt werden.

Es gibt unterschiedliche Anordnungen von verschiedenen Bremselementen 5, 6, 7 unmittelbar und mittelbar an der Ankerwelle 1. Ein axiales Bremselement 5 bringt eine Bremskraft axial auf die Ankerwelle 1 über den Bremsläufer 4 auf, dessen Fläche für einen besseren Wirkungsgrad in diesem Beispiel vergrößert ist.

Eine weiteres einseitiges Bremselement 6 ist seitlich am Bremsläufer 4 angeordnet. Zur Erzielung einer größeren Bremswirkung kann dieses Bremselement 6 in Richtung der Längsachse der Ankerwelle 1 verlängert sein.

Mindestens zwei beidseitige Bremselemente 7 sind einander gegenüberliegend an der Ankerwelle 1 angeordnet. Es können auch mehrere gegenüberliegende Paare in einer sternförmigen Anordnung sein. Sie befinden sich beispielsweise innerhalb eines nicht dargestellten Motorgehäuses, zum Beispiel auf einer zusätzlichen oder schon vorhandenen Platte, welche die sogenannte Kohlehalterplatte sein kann.

In Fig. 2 ist eine spezielle Anordnung einer Bremsvorrichtung in Form einer Scheibenbremse gezeigt. Hierbei ist der Bremsläufer 4 als Scheibe ausgebildet und wird an seiner Peripherie von einer oder mehreren doppelseitigen Bremelementen 5, 6, 7 jeweils mit einer Bremskraft beaufschlagt. Die Anordnung eines axialen Bremselementes ist ebenfalls allein oder zusätzlich möglich.

Fig. 3 veranschaulicht in einer schematischen Blockdarstellung den prinzipiellen Aufbau eines Bremselements 5, 6, 7. Ein Bremsglied 10, beispielsweise ein Träger mit einem Bremsbelag, steht in direktem Kontakt mit der Ankerwelle 1 oder einem Bremsläufer 4, welche auf der jeweiligen Kontaktfläche Reibbeläge, Aufrauhungen oder dergleichen oder auch keine weitere Behandlung aufweisen.

Das Bremsglied 10 wird von einer Kraftspeichereinrichtung 11 auf die Ankerwelle 1 gepresst, was durch die von der Kraftspeichereinrichtung 11 erzeugte Bremsanpresskraft erfolgt. Eine Betätigungseinrichtung 12 hebt die Wirkung der Krafspeichereinrichtung 11 bei Erhalt eines Betätigungssignals an einem Betätigungseingang 13, 14 auf und lüftet somit die Bremsvorrichtung.

Die Kraftspeichereinrichtung 11 kann beispielsweise eine Feder oder ähnliches sein.

Auch eine aktive Bremsvorrichtung ist möglich, das bedeutet, daß bei Aktivierung der Betätigungseinrichtung 12 das Bremsglied 10 auf die Ankerwelle 1 gedrückt wird, also ein Bremvorgang ausgelöst wird. Dieses kann zum Beispiel nicht nur bei Stillstand des Motors erfolgen, sondern auch während seines Betriebs, um ein Abbremsen in einer besonderen Betriebssituation zu ermöglichen, beispielsweise beim Absenken einer schweren Last, die den Motor ohne Bremse sonst beschleunigen würde.

Die Betätigungseinrichtung 12 ist vorzugsweise ein Elektromagnet. Sie ist in einer anderen Ausführungsform aber auch mechanisch über Hebelgetriebe und externe oder selbsttätige Betätigung, mechanisch, thermisch, elektrisch, magnetisch, hydraulisch oder pneumatisch oder Kombinationen daraus aktivierbar. Vorzugsweise ist die Betätigungseinrichtung 12 einstellbar, um die Wirkung bei unterschiedlichen Anwendungen zu optimieren.

Schließlich zeigt Fig.4 ein weiteres Beispiel einer Ausführungsform der vorliegenden Erfmdung, bei welchem ein Motor 3 an seiner Rückseite mit einem Bremsmodul 9 in einem Gehäuse ausgerüstet ist. Das Bremsmodul 9 weist einen Bremsläufer 4 auf, der in diesem Gehäuse mittels Lager 8 gelagert ist. Die Bremselemente 5, 7 können unterschiedlich, das heißt gemeinsam oder allein, angebracht sein. Der Bremsläufer 4 steht in drehfester Verbindung mit der Ankerwelle 1, beispielsweise über eine Kupplung 2 oder eine formschlüssige Steckverbindung. Das Bremsmodul 9 kann am Gehäuse des Motors 3 angeschraubt oder beispielsweise mittels einer Schnellverschlußeinrichtung befestigt sein. Der Motor 3 besitzt ohne Bremsmodul 9 an dessen Stelle eine Abdeckkappe mit identischer Schnellverschlußeinrichtung. Die Betätigung des Bremsmoduls 9 kann in vielfältiger Weise erfolgen: elektrische Betätigung 14 über eine Steckverbindung zu den elektrischen Motoranschlüssen, elektrische, mechanische, hydraulische oder pneumatische externe Betätigung 13, oder mechanische Betätigung vom Motor 3, zum Beispiel über eine durch die Last verschiebbare Ankerwelle 1.

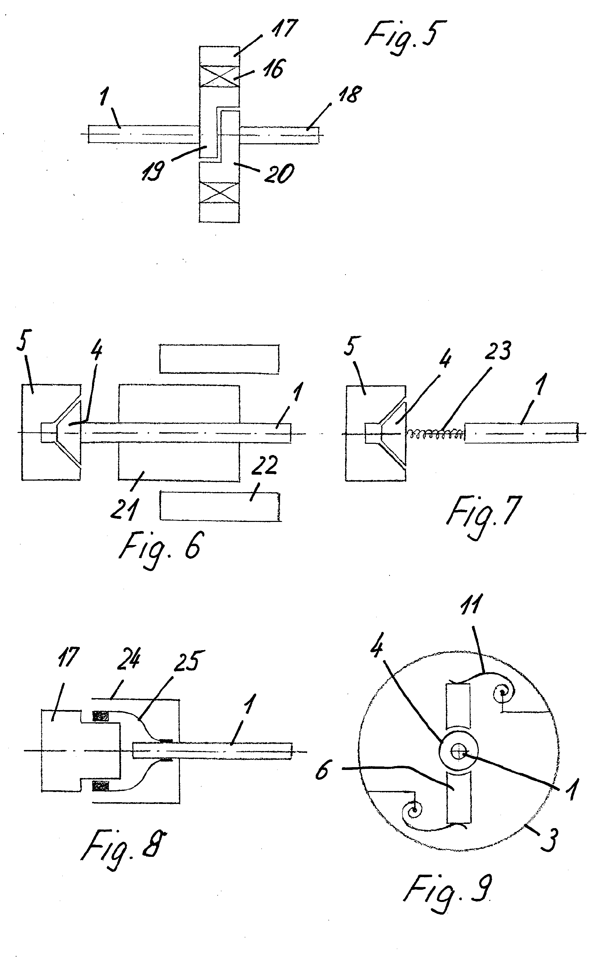

Fig. 5 zeigt eine Anordnung mit unterbrochener Ankerwelle 1. Dabei ist die Ankerwelle 1 mit einem ersten Läufer 19 fest verbunden. Ein zweiter Läufer 20 ist mit dem Abtriebszapfen 18 des Motors 3 fest verbunden. Beide Läufer 19, 20 sind klauenartig geformt. Die Klauen greifen jedoch derart ineinander, dass ein bestimmtes Maß eines Verdrehwinkels zwischen Ankerwelle 1 und Abtriebszapfen 18 des Motors 3 gegeben ist. Beide Läufer 19, 20 werden gemeinsam von einem radialen Bremselement 16 konzentrisch überdeckt, welches sich in radialer Richtung aufweiten oder verjüngen kann. Das radiale Bremselement 16 kann in Form eines Drahtes oder Bandes über einen bestimmten Winkelabschnitt oder über mehr als eine Windung um die Läufer 19, 20 gelegt sein. Unabhängig von der Drehrichtung des Motors 3 findet zunächst bei Beginn der Drehbewegung des Motors 3 eine Relativbewegung zwischen der Ankerwelle 1 und dem Abtriebszapfen 18 des Motors 3 statt. Dabei verjüngt oder weitet sich das radiale Bremselement 16 derart, dass eine kraftschlüssige Verbindung zu dem ortsfest angeordneten Bremsstator 17 zumindest teilweise aufgehoben ist. Befindet sich der Motor 3 im Stillstand, so ist der Abtriebszapfen 18 des Motors 3 bestrebt, den zweiten Läufer 20, das damit in Verbindung stehende radiale Bremselement 16 und letzendlich die Ankerwelle in Rotation zu versetzen. Dabei erfolgt jedoch in kinematischer Umkehr eine Weitung oder Verjüngung des radialen Bremselementes 16 derart, dass eine kraftschlüssige Verbindung zwischen dem radialen Bremselement 16 und dem Bremsstator 17 entsteht. Diese kraftschlüssige Verbindung wird um so größer, je größer ein Drehmoment an dem Abtriebszapfen 18 des Motors 3 ist. In weiterer jedoch nicht näher dargestellter Weise ist eine Anordnung vorgesehen, bei welcher der Spulenträger oder der Anker oder ein Kollektor drehfest oder stoffschlüssig mit dem ersten Läufer 19 verbunden ist.

Die zuvor genannten Anordnungen gemäß der Fig. 5 weisen konzentrisch zueinander liegende Bauteile auf. In weiterer jedoch ebenfalls nicht näher dargestellter Weise ist eine Anordnung vorgesehen, wobei die zuvor beschriebenen Bauteile in Längsrichtung der Ankerwelle 1 hintereinander angeordnet sind. Dabei findet beim Anlaufen des Motors 3 ebenfalls eine Relativbewegung zwischen der Ankerwelle 1 oder einem Spulenträger oder eines Ankers und dem Abtriebszapfen 18 des Motors 3 statt. Dieser Bewegungsablauf in Längsrichtung wird ausgenutzt, um die kraftschlüssige Verbindung zwischen einem ersten Läufer 19 und einem Bremsstator 17 zu beeinflussen.

Die Fig. 6 zeigt eine Anordnung mit einem sogenannten Verschiebeanker. Dabei ist auf die Ankerwelle 1 ein Rotor 21 und ein Bremsläufer 4 fest aufgesetzt. Der Bremsläufer 4 weist beispielhaft eine konische und einteilige Bremsfläche auf. Der Rotor 21 ist bei dieser Ausgestaltung der Anker des Motors 3 und gemäß der Fig 6 zylindrisch gestaltet. Der Anker könnte jedoch auch konisch ausgebildet sein. In Längsrichtung der Ankerwelle 1 steht im Versatz zu dem Rotor 21 der Stator 22 des Motors 3. Wird nun der Motor in Betrieb genommen, so entsteht eine Ausrichtung der Magnetfelder zwischen Rotor 21 und Stator 22 derart, dass eine Verschiebung in Längsrichtung der Ankerwelle 1 erfolgt. Dabei ist der Bremsläufer 4 so ausgebildet, dass eine kraftschlüssige Verbindung zwischen dem Bremsläufer 4 und dem axialen Bremselement 5 zumindest teilweise aufgehoben ist. Im Stillstand des Motors verschiebt ein nicht näher dargestelltes Federelement die Ankerwelle 1 wieder in Richtung des axialen Bremselements 5, so dass eine kraftschlüssige Verbindung zwischen dem Bremsläufer 4 und dem ortsfest angeordnetem axialen Bremselement 5 entsteht. Auch hierbei können Rotor 21 und Bremsläufer 4 ein Formteil bilden.

Die Fig. 7 zeigt eine Bremsvorrichtung 15 mit einem elastischen Koppelelement 23. In beispielhafter Ausgestaltung ist das elastische Koppelelement 23 in Verlängerung der Ankerwelle 1 angeordnet und mit seinem freien Ende an das eine Ende der Ankerwelle 1 fest angeschlossen. Das andere Ende des elastischen Koppelelements 23 ist mit einem Bremsläufer 4 fest verbunden. Der Bremsläufer 4 steht wiederrum kraftschlüssig mit dem axialen Bremselement 5 in Verbindung. Das elastische Koppelelement 23 kann nach Art einer Schraubenfeder aufgebaut sein oder weist einen oder mehrere im Abstand zueinander angeordnete Federstäbe auf. Das elastische Koppelelement 23 weist einen Abschnitt auf, der in Richtung aller Freiheitsgrade elastisch verformbar ist.

Wie Fig. 7 zeigt ist das elastische Koppelelement 23 zwischen der Ankerwelle 1 und dem Bremsläufer 4 derart verspannt, dass bei Stillstand des Motors 3 der Bremsläufer 4 eine Kraft auf das axiale Bremselement 5 ausübt. Diese Kraft erzeugt ein bestimmtes Reibmoment, welches die Ankerwelle mit einem bestimmten Maß bremst. Der elastisch verformbare Abschnitt des elastischen Koppelelements 23 kann derart gestaltet sein, dass sich bei Rotation der Ankerwelle 1 ein Winkelversatz in Drehrichtung zwischen der Ankerwelle 1 und dem elastischen Koppelelement 23 einstellt. Dabei kann der elastisch verformbare Abschitt des elastischen Koppelelements 23 derart gestaltet sein, dass sich eine Verkürzung des Abstands zwischen der Ankerwelle 1 und dem Bremsläufer 4 oder eine Reduzierung der Anpreßkfraft zwischen dem Bremsläufer 4 und dem axialen Bremselement 5 einstellt. Das Bremsmoment wird somit bei Betrieb des Motors 3 auf ein Minimum reduziert.

Die Darstellung in der Fig. 7 ist nur beispielhaft. Denkbar ist auch eine Anordnung mit einem elastischen Koppelelement 23, welches sich in radialer Richtung erstreckt und beim Einschalten des Motors 3 eine Änderung der Anpreßkraft in radialer Richtung oder eine Änderung des wirksamen Radius an einen Bremsstator 17 erzeugt.

Die Fig. 8 zeigt noch eine weitere Anordnung mit einem elastischen Federelement 25. Dabei ist auf der Ankerwelle 1 mindestens ein elastisches Federelement 25 mit einem seiner beiden freien Enden befestigt. Das andere freie Ende des elastischen Federelemetes 25 kann einen Reibbelag aufweisen, der im Stillstand des Motors 3 an dem Umfang eines zylindrischen Abschnittes eines Bremsstators 17 anliegt. Dabei ist das jeweilige elastische Federelement 25 so gestaltet, dass sein zweites freies Ende bei Stillstand des Motors 3 eine bestimmte Kraft auf den Bremsstator 17 ausübt und die Ankerwelle mit einem bestimmten Bemsmoment feststellt.

Weiterhin ist auf der Ankerwelle eine topfförmige Hülse 24 fest aufgesetzt, die das jeweilige zweite freie Ende des jeweiligen elastischen Federelements 25 übergreift. Bei Betrieb des Motors hebt die Fliehkraft bei Erreichen einer bestimmten Drehzahl die Anpreßkraft zwischen dem elastischen Federelement 25 und dem Bremsstator 17 auf, und die Ankerwelle 1 kann ohne ein Bremsmoment frei rotieren. Damit die elastischen Federelemente 25 bei hohen Drehzahlen der Ankerwelle 1 gestützt werden, ist eine Hülse 24 vorgesehen, an dessen innerer Mantelfläche sich die elastischen Federelemente 25 anlegen.

Die Fig. 9 zeigt eine Ansicht senkrecht zur Längsrichtung der Ankerwelle 1. Auf der Ankerwelle 1 ist ein nach Art einer Trommel ausgebildeter Bremsläufer 4 befestigt. In nicht näher dargestellter Weise sind an dem Gehäuse des Motors 3 zwei sich gegenüber liegende einseitige Bremselemente 6 in radialer Richtung beweglich geführt. Die einseitigen Bremselemente 6 werden unter Federdruck durch eine Kraftspeichereinrichtung in Richtung auf die äußere Mantelfläche des zylindrischen Bremsläufers 4 gedrückt. Die vorherrschenden Andruckkräfte erzeugen bei Stillstand des Motors 3 ein auf die Ankerwelle 1 einwirkendes Bremsmoment. Die Kraftspeicherelemente selbst sind an dem Gehäuse des Motors 3 fixiert.

In nicht näher dargestellter Weise sind elektrische Leitungen vorgesehen, welche an die jeweilige Kraftspeichereinrichtung 11 angeschlossen sind. Die Kraftspeichereinrichtung 11 selbst besteht aus einem bekannten Werkstoff oder aus einer bekannten Werkstoffpaarung, welche durch Wärmeeinwirkung eine andere Formgebung einnimmt, beispielsweise eine so genannte Gedächtnis-Metall-Legierung (Memory-Metall). Bei Betrieb des Motors 3 wird an die zuvor beschriebenen elektrischen Leitungen eine elektrische Spannung angelegt. Die an dem Kraftspeicherelement 11 angeschlossenen elektrischen Leitungen erzeugen als Folge eines Stromflusses Wärme, die auf die Kraftspeichereinrichtung 11 einwirkt. Die Kraftspeichereinrichtung 11 ist nun derart ausgebildet, dass bei einer Wärmeeinwirkung die Intensität des Kraftspeichers abnimmt. Als Folge dessen wird bei Betrieb des Motors 3 die Bremswirkung zumindest teilweise aufgehoben.

Als weitere Ausführungsform kann die Kraftspeichereinrichtung 11 zumindest abschnittsweise elektrisch leitend sein. Dabei kann ein Stromfluß durch das Kraftspeicherelement 11 erfolgen, welcher das Kraftspeicherelement 11 erwärmt. Als Folge dessen reduziert sich wieder rum die Intensität des Kraftspeichers.

In weiterer Ausführungsform ist vorgesehen, dass der Kollektor eines Motors 3 den Bremsläufer 4, die Kohlebürsten eines Motors 3 das einseitige Bremselement 6 und die Kohlebürstenfedern eines Motors 3 die Kraftspeichereinrichtung 11 darstellt.

Die Erfindung ist nicht auf das oben beschriebene Ausführungsbeispiel beschränkt.

So ist es denkbar, daß die Kraftspeichereinrichtung 11 in der Betätigungseinrichtung 12 integriert ist oder durch sie gebildet wird.

### Bezugszeichenliste

- 1: Ankerwelle
- 2: Kupplung
- 3: Motor
- 4: Bremsläufer
- 5: axiales Bremselement
- 6: einseitiges Bremselement
- 7: doppelseitiges Bremselement
- 8: Lager
- 9: Bremsmodul
- 10: Bremsglied
- 11: Kraftspeichereinrichtung
- 12: Betätigungseinrichtung
- 13: erster Betätigungseingang
- 14: zweiter Betätigungseingang
- 15: Bremsvorrichtung
- 16: radiales Bremselement
- 17: Bremsstator
- 18: Abtriebszapfen
- 19: erster Läufer
- 20: zweiter Läufer
- 21: Rotor
- 22: Stator
- 23: elastisches Koppelelement
- 24: Hülse
- 25: elastisches Federelement

## Patentansprüche

1. Bremsvorrichtung (15) für einen elektrischen Motor (3), insbesondere für einen Antriebsmotor mit einer Ankerwelle (1) für verstellbare Möbel, welche Folgendes aufweist:
- mindestens ein Bremselement (5, 6, 7) zum Feststellen der Ankerwelle (1) bei Stillstand des Motors (3);
- mindestens eine Kraftspeichereinrichtung (11) zum Aufbringen einer Kraft auf das Bremsglied (10) bei Stillstand des Motors (3);
- mindestens eine Betätigungseinrichtung (12) zum Betätigen der Bremsvorrichtung (15) und zum Lüften derselben durch Aufhebung der Einwirkung der Kraftspeichereinrichtung (11) auf das Bremsglied (10) bei Betrieb des Motors (3);
- mindestens einen Betätigungseingang (13, 14) zur Einleitung einer Kraft und/oder eines Signals zur Betätigung der Betätigungseinrichtung (12); und
- mindestens einen Bremsläufer (4), welcher mit der Ankerwelle (1) in drehfester Verbindung steht.

2. Bremsvorrichtung (15) nach Anspruch 1, **dadurch gekennzeichnet, daß** ein axiales Bremselement (5) axial und/oder ein einseitiges Bremselement (6) und/oder eine doppelseitiges Bremselement (7) mit dem Bremsläufer (4) zum Zusammenwirken ausgebildet ist.

3. Bremsvorrichtung (15) nach Anspruch 2, **dadurch gekennzeichnet, daß** das doppelseitige Bremselement (7) mehrseitig ausgebildet ist.

4. Bremsvorrichtung (15) nach einem der Ansprüche 1 bis 3, **dadurch gekennzeichnet, daß** die Kraftspeichereinrichtung (11) ein Kraftspeicherelement, vorzugsweise eine Feder, aufweist.

5. Bremsvorrichtung (15) nach einem der Ansprüche 1 bis 3, **dadurch gekennzeichnet, daß** die Kraftspeichereinrichtung (11) durch magnetische, elektromagnetische, elektrische, hydraulische oder pneumatische Krafteinwirkung ausgebildet ist.

6. Bremsvorrichtung (15) nach einem der Ansprüche 1 bis 5, **dadurch gekennzeichnet, daß** die Betätigungseinrichtung (12) der Bremsvorrichtung (15) die Kraftspeichereinrichtung (11) aufweist.

7. Bremsvorrichtung (15) nach einem der Ansprüche 1 bis 6, **dadurch gekennzeichnet, daß** die Betätigungseinrichtung (12) der Bremsvorrichtung (15) durch magnetische, elektromagnetische, elektrische, hydraulische oder pneumatische Einwirkung ausgebildet ist.

8. Bremsvorrichtung (15) nach einem der Ansprüche 1 bis 7, **dadurch gekennzeichnet, daß** die Ankerwelle (1) axial verschiebbar zur Betätigung der Bremsvorrichtung (15) und/oder der Steuerung der Betätigungseinrichtung (12) ausgebildet ist.

9. Bremsvorrichtung (15) nach einem der Ansprüche 1 bis 7, **dadurch gekennzeichnet, daß** die Kraftspeichereeinrichtung (11) einstellbar und/oder selbstnachstellend ausgebildet ist.

10. Bremsvorrichtung (15) nach einem der Ansprüche 1 bis 9, **dadurch gekennzeichnet, daß** die Kraftspeichereinrichtung (11) mittels einer äußeren Stelleinrichung zur Aufhebung der Bremswirkung lösbar ausgebildet ist.

11. Bremsvorrichtung (15) nach einem der Ansprüche 1 bis 10, **dadurch gekennzeichnet, daß** bei Betrieb des Motors (3) die Bremsvorrichtung (15) gelüftet ist.

12. Bremsvorrichtung (15) nach einem der Ansprüche 1 bis 11, **dadurch gekennzeichnet, daß** die Bremsvorrichtung (15) in einem Bremsmodul (9) angeordnet ist, welches an dem Motor (3) angebracht und mit der Ankerwelle (1) über eine Kupplung (2) drehfest gekoppelt ist.

13. Bremsvorrichtung (15) nach Anspruch 12, **dadurch gekennzeichnet, daß** das Bremsmodul (9) den Bremsläufer (4) und das Bremsglied (10) aufweist, wobei die Betätigungseinrichtung (12) externe Betätigungseingänge (13, 14) oder Verbindungen dieser mit dem Motor (3) aufweist.

14. Bremsvorrichtung (15) nach einem der Ansprüche 1 bis 11, **dadurch gekennzeichnet, daß** die Bremsvorrichtung (15) im Motor (3) angeordnet ist.

15. Bremsvorrichtung (15) nach einem der Ansprüche 1 bis 14, **dadurch gekennzeichnet, daß** die Bremsvorrichtung (15) mit dem Bremsläufer (4) bei Stillstand des Motors (3) in einer formschlüssigen und/oder kraftschlüssigen, drehfesten lösbaren Verbindung steht.

16. Möbel, insbesondere Liege- oder Schlafmöbel, **dadurch gekennzeichnet, dass** eine Bremsvorrichtung nach einem der vorhergehenden Ansprüche vorgesehen ist.
